# EUROPEAN PATENT APPLICATION

(11) **EP 4 851 800 A1**
(43) Date of publication of application: **09.12.2026**
(21) Application number: 25199115.4
(22) Date of filing: 29.08.2025
(51) Int. Cl.: G06F 9/50, G06N 20/00, G06N 5/043

(54) **METHOD AND SYSTEM FOR DEPLOYING AND MANAGING ARTIFICIAL INTELLIGENCE AGENTS IN A DISTRIBUTED COMPUTING ENVIRONMENT**

(30) Priority: 03.06.2025 EP 25180482
(71) Applicant: Siemens Aktiengesellschaft, 80333 München (DE)
(72) Inventor: Sauer, Markus, 81739 München (DE); Singh, Saurabh Narayan, 81739 München (DE)
(74) Representative: Siemens Patent Attorneys

(57) **Abstract**

The present disclosure provides a computer-implemented method for deploying and managing artificial intelligence (AI) agents in a distributed computing environment. The method includes modeling a plurality of AI agents as stateless functions, deploying the plurality of AI agents using a Function as a Service (FaaS) orchestrator, managing resource requirements and availability for the plurality of AI agents using a capability manager, and handling external state information for the plurality of AI agents using a state manager. The method enables dynamic scaling, efficient resource allocation, and improved performance of AI agents in heterogeneous distributed computing environments.

## Description

The invention relates to artificial intelligence systems in distributed computing environments, and more particularly to a method and system for deploying and managing agentic Al models using a Function as a Service (FaaS) paradigm for self-scaling and automatic orchestration. Artificial intelligence (Al) systems have become increasingly prevalent in various domains, including robotics, business processes, industrial systems, finance, and healthcare. These systems often operate as autonomous intelligent agents capable of executing complex tasks without continuous human intervention. As Al technologies advance, there is a growing need for efficient deployment and management of Al agents in distributed computing environments. Distributed edge environments present unique challenges for deploying and orchestrating Al agents. These environments typically consist of heterogeneous devices with varying computational capabilities, hardware architectures, and resource constraints. Additionally, workloads in such environments can fluctuate significantly, requiring dynamic scaling of Al agents and adaptable execution strategies.

Current approaches to deploying Al agents in distributed environments have limitations. Manual deployment methods are labor-intensive and lack scalability. Standard orchestration tools, while providing some automation, may not fully account for the specific requirements of heterogeneous edge devices. Fixed deployment architectures can lead to inefficient resource utilization, particularly when Al agents are not consistently in use.

Resource optimization is a challenge in distributed Al systems, especially when dealing with varying workloads and priorities. Efficiently allocating computational resources across heterogeneous devices while maintaining system performance and responsiveness can be complex. Furthermore, managing the state and context of Al agents in a distributed environment presents additional complications.

Scalability is another concern in distributed Al systems. As the number of Al agents and the complexity of tasks increase, traditional deployment methods may struggle to efficiently scale resources up or down based on demand. This can result in either underutilization of available resources or performance bottlenecks during peak loads.

Maintaining low latency in communication between Al agents and ancillary systems is crucial for real-time applications. However, achieving this in a distributed environment with varying network conditions and device capabilities can be challenging.

It has been appreciated that a system is needed that overcomes one or more of these problems.

It is therefore the object of the present invention to provide a method for deploying and managing artificial intelligence agents in a distributed computing environment, a system for deploying and managing artificial intelligence agents in a distributed computing environment and a computer program, that overcome one or more of these problems.

This object of the present invention is solved with a method for deploying and managing artificial intelligence agents in a distributed computing environment as defined in claim 1, a system for deploying and managing artificial intelligence agents in a distributed computing environment as defined in claim 12, and a computer program as defined in claim 15.

Advantageous aspects of the invention are contained in the subsequent dependent claims, the following description and the drawing.

The computer-implemented method for deploying and managing artificial intelligence (AI) agents in a distributed computing environment according to the invention includes modeling a plurality of Al agents as stateless functions, deploying the plurality of Al agents as functions as a service, and preferably also managing resource requirements and availability for the plurality of Al agents.

This method provides significant advantages in terms of scalability, flexibility, and resource optimization. By modeling Al agents as stateless functions and deploying them as functions as a service, the system can dynamically deploy and scale Al agents based on current workload and available resources. Managing resource requirements and availability ensures efficient allocation of resources across the distributed computing environment.

Managing resource requirements and availability for the plurality of Al agents preferably includes estimating and preferably monitoring, how many resources, particularly computing resources and/or storage resources, the Al agents require, respectively.

Managing resource requirements and availability for the plurality of Al agents preferably includes estimating and preferably monitoring, how many resources, particularly computing resources and/or storage resources, are available in the distributed computing environment. Managing resource requirements and availability for the plurality of Al agents preferably includes matching the resource requirements and the available resources.

In an advantageous aspect of the method according to the invention, the method further includes monitoring load in the distributed computing environment for dynamic scaling and resource allocation of the plurality of Al agents.

Continuous load monitoring enables real-time adaptation to changing workloads, ensuring optimal performance and resource utilization across the distributed computing environment.

In another advantageous aspect of the method according to the invention, deploying the plurality of Al agents comprises assessing computational requirements of each Al agent of the plurality of Al agents, and allocating each Al agent to a computing device based on the computational requirements and available resources in the distributed computing environment. This aspect ensures that each Al agent is allocated to the most suitable computing device, optimizing performance and resource utilization across the heterogeneous distributed environment.

In another advantageous aspect of the method according to the invention, managing resource requirements and availability comprises maintaining a data structure storing computational requirements of each Al agent and available resources in the distributed computing environment.

By maintaining a comprehensive data structure of resource requirements and availability, the system can make informed decisions about resource allocation and scaling, leading to improved efficiency and performance.

In another advantageous aspect of the method according to the invention, the method further includes handling external state information for the plurality of Al agents.

Handling external state information allows for more efficient and consistent management of contextual information across the distributed system, enabling seamless scaling and fault tolerance.

In another advantageous aspect of the method according to the invention, the method further includes dynamically scaling the plurality of Al agents based on current workload in the distributed computing environment.

Dynamic scaling ensures that the system can adapt to varying workloads in real-time, optimizing resource utilization and maintaining high performance under changing conditions.

In another advantageous aspect of the method according to the invention, the method further includes predicting future demands in the distributed computing environment and proactively adjusting resources allocated to the plurality of Al agents based on the predicted future demands.

Predictive resource allocation allows the system to anticipate and prepare for future workloads, further enhancing efficiency and responsiveness.

In another advantageous aspect of the method according to the invention, the method further includes detecting and correcting faults within the plurality of Al agents and the distributed computing environment.

This self-healing capability improves the overall reliability and robustness of the system, reducing downtime and ensuring continuous operation even in the face of failures.

The system according to the invention for deploying and managing artificial intelligence (AI) agents in a distributed computing environment includes a Function as a Service (FaaS) runtime configured to execute a plurality of Al agents as stateless functions, a function as a service orchestrator configured to manage deployment and scaling of the plurality of Al agents, a capability manager configured to track resource requirements and availability for the plurality of Al agents, a state manager configured to handle external state information for the plurality of Al agents, and a load monitoring component configured to make dynamic scaling decisions for the plurality of Al agents.

This system provides a comprehensive solution for managing Al agents in a distributed environment, offering advantages in terms of scalability, resource optimization, and adaptability to changing workloads.

In another advantageous aspect of the system according to the invention, the system further includes a plurality of computing devices forming a heterogeneous resource pool, wherein the plurality of computing devices have varying computational capabilities.

The heterogeneous resource pool allows for efficient utilization of diverse computing resources, from high-performance servers to edge devices, enabling flexible deployment of Al agents across a wide range of hardware configurations.

The invention, as described above, provides a robust and efficient solution for deploying and managing Al agents in distributed computing environments. By leveraging the Function as a Service paradigm and incorporating dynamic resource management, the system offers significant improvements in scalability, flexibility, and resource utilization compared to existing solutions. This approach is particularly well-suited for industrial applications where workloads can vary significantly and efficient operation of Al agents is crucial for overall system performance.

In the following, the invention is described in more details with a specific embodiment shown in the attached drawing.

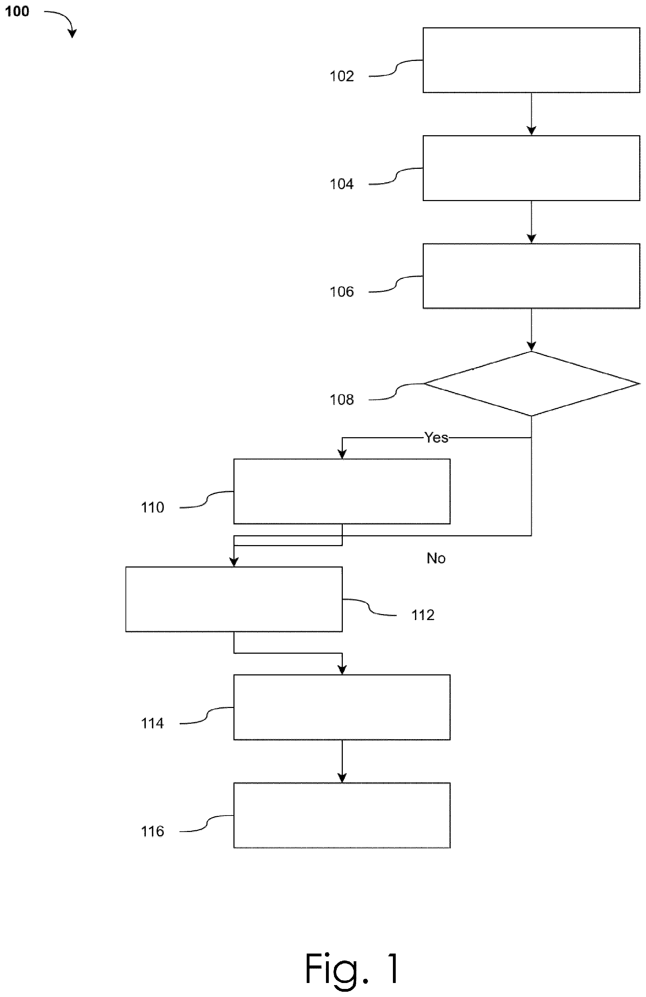

- FIG. 1: illustrates a flowchart for a method according to the invention of deploying and managing artificial intelligence agents in a distributed computing environment.

The computer-implemented method 100 shown in FIG. 1 for deploying and managing artificial intelligence (AI) agents in a distributed computing environment provides a systematic approach for orchestrating Al agents using a Function as a Service (FaaS) paradigm to address the challenges of resource management and scalability in heterogeneous computing environments. The method 100 begins with a step 102 of modeling a plurality of Al agents as stateless functions. In step 102, each Al agent is designed to operate without retaining internal state between executions. The Al agents are configured as computational units that can perform tasks such as data processing, decision making, and machine learning model inference. The stateless design allows for greater flexibility and scalability in deployment across the distributed computing environment.

The method 100 proceeds to a step 104 of deploying the plurality of Al agents as functions as a service. In step 104, the Al agents are instantiated within a FaaS runtime environment that provides the infrastructure to deploy, run, and manage the lifecycle of the functions. The deployment process includes assessing computational requirements of each Al agent of the plurality of Al agents and allocating each Al agent to a computing device based on the computational requirements and available resources in the distributed computing environment. The method 100 continues with a step 106 of managing resource requirements and availability for the plurality of Al agents. Step 106 involves maintaining a data structure storing computational requirements of each Al agent and available resources in the distributed computing environment. The resource requirements include factors such as CPU, GPU, bandwidth, and memory specifications for each Al agent. The distributed computing environment comprises heterogeneous devices including at least one of high-performance servers, edge devices, and constrained devices.

The method 100 includes a decision step 108 that determines whether load monitoring is required for the current operational conditions. If load monitoring is required, the method 100 proceeds to a step 110 of monitoring load in the distributed computing environment for dynamic scaling and resource allocation of the plurality of Al agents. Step 110 involves continuously assessing workload and performance of the distributed computing environment and the plurality of Al agents in real-time. If load monitoring is not required at decision step 108, the method 100 proceeds directly to a step 112.

At step 112, the method 100 performs dynamically scaling the plurality of Al agents based on current workload in the distributed computing environment. Step 112 includes predicting future demands in the distributed computing environment and proactively adjusting resources allocated to the plurality of Al agents based on the predicted future demands. The scaling process ensures optimal resource utilization while maintaining performance requirements.

The method 100 proceeds to a step 114 of handling external state information for the plurality of Al agents. Step 114 includes storing and retrieving state data for the plurality of Al agents in a centralized infrastructure. The external state management enables the stateless Al agents to maintain contextual awareness, input history, and workflow information while preserving their lightweight and flexible characteristics.

The method 100 concludes with a step 116 of detecting and correcting faults within the plurality of Al agents and the distributed computing environment. Step 116 provides self-healing mechanisms that automatically identify and address faults to ensure uninterrupted operation and system reliability.

The method 100 includes initializing the system by performing initial deployment planning and agent deployment steps. During initialization, the FaaS orchestrator assesses the computational requirements of each Al agent and evaluates available resources across the system before coordinating the deployment of Al agents to suitable computing devices.

A system for deploying and managing artificial intelligence (AI) agents in a distributed computing environment includes several interconnected components that work together to execute and manage Al agents as stateless functions. The system provides dynamic resource allocation and scaling capabilities across heterogeneous computing environments.

The system includes a Function as a Service (FaaS) runtime configured to execute a plurality of Al agents as stateless functions. The FaaS runtime provides the execution environment for the Al agents and manages the lifecycle of these functions efficiently. The FaaS runtime enables Al agents to operate without retaining internal state between executions, allowing for greater flexibility and scalability in deployment.

A function as a service orchestrator is configured to manage deployment and scaling of the plurality of Al agents. The function as a service orchestrator coordinates the deployment, scaling, and termination of Al agents across available computing resources. The function as a service orchestrator is further configured to assess computational requirements of each Al agent of the plurality of Al agents and allocate each Al agent to a computing device of the plurality of computing devices based on the computational requirements and available resources. The function as a service orchestrator ensures that the system adapts dynamically to changing workloads and operational requirements while maintaining optimal performance and resource utilization.

A capability manager is configured to track resource requirements and availability for the plurality of Al agents. The capability manager maintains a dynamic data structure storing the computational requirements of each Al agent, the available resources in the system, and the capabilities of each device and distributed computing node. The capability manager tracks factors such as CPU, GPU, bandwidth, and memory to ensure that each agent can be allocated appropriate resources for assigned tasks.

The system further includes a plurality of computing devices forming a heterogeneous resource pool, wherein the plurality of computing devices have varying computational capabilities. The plurality of computing devices provide the computational resources and memory required to execute the functions and corresponding Al agents. The plurality of computing devices vary in capability, ranging from high-performance servers to edge devices with limited resources, or constrained devices. The available capability at any given time in the network of computing devices can fluctuate, and the system dynamically allocates Al agents to these devices based on their capabilities and current workload.

A state manager is configured to handle external state information for the plurality of Al agents. The state manager handles external state information such as contextual awareness, input history, and workflow required by the Al agents to function efficiently. The state manager provides a centralized infrastructure for storing and retrieving state data, allowing the stateless functions to remain lightweight and flexible while maintaining context. The state manager enables asynchronous and parallel handling of interdependent tasks.

A load monitoring component is configured to make dynamic scaling decisions for the plurality of Al agents. The load monitoring component continuously assesses the workload and performance of the system and specific Al agents in real time. The collected metrics are used by the function as a service orchestrator to enable resource allocation and scaling, ensuring that the system can adapt to varying demands and maintain performance and scalability requirements.

In scenarios where the system interacts with the physical world, interconnected cyberphysical systems may be included. These systems consist of sensors, actuators, and other devices that provide real-time data and feedback to the Al agents. The interconnected cyberphysical systems enable the system to perform tasks such as monitoring environmental conditions, controlling machinery, and responding to physical events in real-time.

In an alternative embodiment, which, in all other aspects, is identical to the previously described embodiment, the system includes interconnected cyberphysical systems such as actuators and sensors. The interconnected cyberphysical systems provide real-time data and feedback to the Al agents. The sensors monitor environmental conditions, machinery status, and physical events within the distributed computing environment. The actuators respond to control signals from the Al agents to perform physical actions such as adjusting machinery settings or controlling industrial processes.

In another embodiment, which, in all other aspects, is identical to the previously described embodiment, the method includes a performance optimization step. The performance optimization step uses insights from load monitoring and operational data to refine and optimize the deployment strategy. The FaaS orchestrator analyzes performance metrics collected during operation to identify patterns and inefficiencies in resource allocation. The deployment strategy is continuously updated based on the analyzed performance data to improve overall system efficiency.

In a further embodiment, which, in all other aspects, is identical to the previously described embodiment, the system includes a model selection and improvement process. AI agents' models are dynamically selected and improved based on workload observations. The system analyzes machine data to generate purpose-specific models tailored to current operational demands. The model selection process evaluates multiple Al models and selects the most suitable model for each specific task or workload condition.

In yet another embodiment, which, in all other aspects, is identical to the previously described embodiment, the method includes handling specific industrial scenarios. The industrial scenarios include raw material handling, production line monitoring, and quality control in a manufacturing plant. For raw material handling, sensors detect arrival of raw materials and trigger Al agents to manage allocation to production lines. For production line monitoring, Al agents monitor each stage of the production process using data from cyberphysical systems. For quality control, Al agents perform real-time quality checks on finished products using machine learning models.

In an additional embodiment, which, in all other aspects, is identical to the previously described embodiment, the system architecture incorporates self-healing mechanisms. The self-healing mechanisms automatically detect and correct faults within the Al agents and the surrounding infrastructure. The self-healing mechanisms monitor system health continuously and identify anomalies or failures in Al agent operation. Upon detecting a fault, the self-healing mechanisms initiate corrective actions such as restarting failed agents, reallocating resources, or switching to backup systems.

In a variant embodiment, which, in all other aspects, is identical to the previously described embodiment, the system is capable of intelligent self-scaling. The intelligent self-scaling predicts future demands and proactively adjusts resources. The system analyzes historical workload patterns and current system metrics to forecast upcoming resource requirements. The proactive resource adjustment occurs before demand peaks, preventing performance degradation and maintaining optimal system responsiveness.

In another variant embodiment, which, in all other aspects, is identical to the previously described embodiment, the method includes maintaining low latency in communication between Al agents and ancillary systems. Low latency is maintained by deploying Al agents close to the source or sink of events. The FaaS orchestrator considers geographical proximity and network topology when allocating Al agents to computing devices. Al agents are positioned to minimize data transmission distances and reduce communication delays with connected systems.

The method described in any of the embodiments above may be implemented as a computer program comprising instructions which, when executed by a computer, cause the computer to carry out the method. The computer program includes executable code for modeling Al agents as stateless functions, deploying the Al agents as functions as a service, and managing resource requirements and availability. The instructions encode the logic for dynamic scaling, state management, and fault detection and correction within the distributed computing environment.

## Claims

1. A computer-implemented method (100) for deploying and managing artificial intelligence (AI) agents in a distributed computing environment, the method comprising:
modeling a plurality of Al agents as stateless functions (102); and
deploying the plurality of Al agents as functions as a service (104);
and preferably comprising managing resource requirements and availability for the plurality of Al agents (106).

2. The method of claim 1, further comprising:
monitoring load in the distributed computing environment for dynamic scaling and resource allocation of the plurality of Al agents (110).

3. The method of claim 1 or 2, wherein deploying the plurality of Al agents comprises:
assessing computational requirements of each Al agent of the plurality of Al agents; and allocating each Al agent to a computing device based on the computational requirements and available resources in the distributed computing environment.

4. The method of any of claims 1 to 3, wherein managing resource requirements and availability comprises:
maintaining a data structure storing computational requirements of each Al agent and available resources in the distributed computing environment.

5. The method of any of claims 1 to 4, further comprising:
handling external state information for the plurality of Al agents (114).

6. The method of claim 5, wherein handling external state information comprises:
storing and retrieving state data for the plurality of Al agents in a centralized infrastructure.

7. The method of any of claims 1 to 6, wherein monitoring load comprises:
continuously assessing workload and performance of the distributed computing environment and the plurality of Al agents in real-time.

8. The method of any of claims 1 to 7, further comprising:
dynamically scaling the plurality of Al agents based on current workload in the distributed computing environment (112).

9. The method of any of claims 1 to 8, further comprising:
predicting future demands in the distributed computing environment; and
proactively adjusting resources allocated to the plurality of Al agents based on the predicted future demands.

10. The method of any of claims 1 to 9, further comprising:
detecting and correcting faults within the plurality of Al agents and the distributed computing environment (116).

11. The method of any of claims 1 to 10, wherein the distributed computing environment comprises heterogeneous devices including at least one of: high-performance servers, edge devices, and constrained devices.

12. A system for deploying and managing artificial intelligence (AI) agents in a distributed computing environment, the system comprising:
a Function as a Service (FaaS) runtime configured to execute a plurality of Al agents as stateless functions;
a function as a service orchestrator configured to manage deployment and scaling of the plurality of Al agents;
a capability manager configured to track resource requirements and availability for the plurality of Al agents;
a state manager configured to handle external state information for the plurality of Al agents; and
a load monitoring component configured to make dynamic scaling decisions for the plurality of Al agents.

13. The system of claim 12, further comprising:
a plurality of computing devices forming a heterogeneous resource pool, wherein the plurality of computing devices have varying computational capabilities.

14. The system of claim 12 or 13, wherein the function as a service orchestrator is further configured to:
assess computational requirements of each Al agent of the plurality of Al agents; and
allocate each Al agent to a computing device of the plurality of computing devices based on the computational requirements and available resources.

15. A computer program comprising instructions which, when executed by a computer, cause the computer to carry out the method of any of claims 1 to 11.
